# EUROPEAN PATENT SPECIFICATION

(11) **EP 4 312 590 B1**
(45) Date of publication and mention of the grant of the patent: **07.05.2025**
(21) Application number: 22719075.8
(22) Date of filing: 30.03.2022
(51) Int. Cl.: A23L 9/10, A21D 13/30, A23L 29/212, C08B 30/14

(54) **ALGINATE-FREE BAKERY CREAMS COMPRISING COLD WATER SWELLABLE STARCH**
ALGINATFREIE BACKCREMES MIT IN KALTEM WASSER QUELLBARER STÄRKE
CRÈMES POUR PÂTISSERIE SANS ALGINATE COMPRENANT DE L'AMIDON GONFLANT DANS L'EAU FROIDE

(30) Priority: 31.03.2021 US 202163168622 P
(43) Date of publication of application: 07.02.2024
(73) Proprietor: CORN Products Development Inc., Westchester, IL 60154 (US)
(72) Inventor: MALISKA, Juliette, Bridgewater, New Jersey 08807 (US); PUSCH, Imke, Bridgewater, New Jersey 08807 (US); HIERNEIS, Justus, Bridgewater, New Jersey 08807 (US); HELL, Dorin, Bridgewater, New Jersey 08807 (US)
(74) Representative: Novagraaf Group
(86) International application number: PCT/US2022/022539
(87) International publication number: WO 2022/212497

(56) References cited:
- EP-A1- 1 102 547
- EP-B1- 1 102 547
- WO-A2-95/04082
- US-A- 4 215 152
- US-A- 6 010 574
- US-B1- 6 221 420

## Description

This specification discloses bakery creams and more specifically alginate free bakery creams. The bakery creams retain the textural and organoleptic properties of alginate containing bakery creams but use a mixture of waxy and non-waxy cold water swellable, thermally inhibited starches instead.

Bakery creams, also called bakery custards, or yellow creams (although they may be differently colored corresponding to their flavor), are commonly piped into bakery goods before or after baking and are formulated to have a mix of functional and organoleptic textural properties. Among these, the bakery cream must be easily and controllably deposited or dispensed into bakery goods. It is also important that the bakery cream become firm quickly after mixing and maintain its firmness over time, neither substantially hardening nor softening. It is further important that the bakery cream maintain its texture during baking or after freezing and thawing.

To achieve its textural and sensory properties, commonly, bakery creams use a combination of chemically modified starches, alginates, and gelling salts as a texturizing system. These ingredients, however, are undesirable to some consumers. So, there is a need for bakery creams that do not use chemically modified starches, alginates and gelling salts but that retain the desired textural and organoleptic properties. EP 1102547 B1 relates to heat stable high-amylopectin starches for use in bakery fillings, preferred are amylopectin:amylose ratios of at least about 90:10.

This specification discloses bakery creams, as well as powdered bakery cream mixes, starch mixes and co-processed starch mixtures useful for making bakery creams having the desirable functional and organoleptic textural properties of bakery creams comprising mixtures of sodium alginate, chemically modified starch, and gelling salts. The disclosed bakery creams, powdered bakery creams mixes, starch mixes and co-processed starch mixtures use a mixture of waxy and non-waxy cold water swellable thermally inhibited starch to effectively replace the texturizing systems of sodium alginate, chemically modified starch, and gelling salts.

### BRIEF DESCRIPTION OF THE FIGURES

The technology disclosed in this specification can be further understood with reference to the following figures, which are provided for illustrative purposes only and do not limit the full scope of the invention.
Figure 1 is a graph depicting the degree of difference of sensory attributes of a bakery cream comprising a cold water swellable, thermally inhibited waxy corn starch compared to a bakery cream comprising an alginate and chemically modified starch.
Figure 2 is a graph depicting the degree of difference of sensory attributes of a bakery cream comprising a cold water swellable, thermally inhibited waxy tapioca starch compared to a bakery cream comprising an alginate and chemically modified starch.
Figure 3 is a graph depicting the degree of difference of sensory attributes of a bakery cream comprising a mix of two-thirds cold water swellable, thermally inhibited waxy corn starch and one-third cold water swellable, thermally inhibited non-waxy potato starch compared to a bakery cream comprising an alginate and chemically modified starch.

In any embodiment disclosed in this specification, a bakery cream comprises a starch component, which comprises all starch within the bakery cream. In any embodiment described in this specification, a bakery cream comprises a starch component in an amount of 5% to about 20% (weight % of the bakery cream), or about 5% to about 15% or about 8% to about 12%. Alternately, the starch component is in an amount of about 12% to about 16%. In any embodiment of a bakery cream described in this specification, the bakery cream comprises a starch component wherein the starch component comprises (i) from about 50% to about 75% of a cold water swellable thermally inhibited waxy starch (weight % of the starch component) and (ii) from about 25% to about 50% of a cold water swellable thermally inhibited non-waxy starch (weight % of the starch component) and wherein the bakery cream does not comprise both a chemically modified starch and an alginate or and optionally does not comprise a gelling salt. The bakery creams disclosed in this specification may be referred to as instant bakery creams because they obtain their desired texture without being heated or otherwise cooked.

In any embodiment of a bakery cream described in this specification, the starch component consists of (i) from about 50% to about 75% of a cold water swellable thermally inhibited waxy starch (weight % of the starch component) and (ii) from about 25% to about 50% of a cold water swellable thermally inhibited non-waxy starch (weight % of the starch component).

In any embodiment of a bakery cream described in this specification the starch component comprises a waxy starch in an amount of about 60% to about 70% (weight % of the starch component), and a non-waxy starch in an amount of about 30% to about 40% (weight % of the starch component).

The starch used in the bakery cream may come from any source. In any embodiment of a bakery cream described in this specification, the bakery cream comprises a waxy starch selected from the group consisting of waxy corn starch, waxy potato starch, and waxy tapioca starch. In any embodiment of a bakery cream described in this specification, the bakery cream comprises a non-waxy starch selected from the group consisting of corn starch, potato starch, and tapioca starch, and in at least some preferred embodiments the non-waxy starch is a potato starch.

The embodiments of bakery creams described in this specification quickly develop a stable firmness. In any embodiment described in this specification, a bakery cream has a firmness of about at least about 150g or about 150 g to about 225 g or from about 150 g to about 200 g or from about 150 g to about 190 g at 20∘ C. In any embodiment described in this specification, a thawed bakery cream has a firmness of at least from about 150 g to about 225 g or from about 150 g to about 200 g or from about 150 g to about 190 g at 20∘ C.

In any embodiment described in this specification a bakery cream is stable during baking, having limited melting or running during baking. A useful test for determine baking stability of a bakery cream compares the size of a disk of bakery cream before and after baking. With reference to the following test, embodiments of bakery creams described in this specification have a baking spread of less than 2 cm or less than 1 cm.

In any embodiment described in this specification, the freeze/thaw stability of a bakery cream can be measured by the amount of liquid that is expelled from a bakery cream during or after thawing. In any embodiment a of bakery cream, which when stored in a plastic cup has a weight of about 75g, when the bakery cream is frozen and thawed, it expels less than about 1.5 g of liquid on thawing, or less than about 1 g or less than about 0.8 g.

The bakery creams described in this specification comprise other food ingredients commonly used in a bakery creams. For example, including water, milk solids, sucrose, and flavorings. Milk solids may be non-fat or may be provided as whey powder or powdered milk having a desired fat content, whether skim, or partially skimmed, or whole milk or non-fat milk solids. Common flavorings include vanilla and chocolate, but other flavors are also within the scope of the described bakery creams. Flavorings are added to a bakery cream in any common form for a flavoring ingredient including oils, extracts, powders. In any embodiment described in this specification, a bakery cream comprises water, or other aqueous liquid, in an amount from 50% to about 75%, or about 65% to about 75% or about 70% to about 75% (weight % of the bakery cream). In any embodiment described in this specification, a bakery cream comprises a powdered milk in an amount from about 1% to about 10% or about 3% to about 7% (weight % of the bakery cream).

Bakery creams described in this specification may also be vegan or free of animal products such as milk or milk derivatives. Milk fats and proteins can, for example, be replaced with vegetable oils or fats or systems of vegetable oils or fats. Useful vegetable oils include any commonly used edible oil. Neutrally flavored oils will be more commonly used, including but not limited to vegetable oil, canola oil, palm oil, corn oil, and sunflower oil. Oils, like coconut oil that are commonly solid at room temperature may also be used. Additionally, within powdered mixes, vegetable fats or oils may be provided in powdered form by loading or plating the oil or fat in a carrier such as a maltodextrin, or a water-soluble maltodextrin, or a tapioca maltodextrin. Milk proteins may be replaced with vegetable proteins, of various concentration, or vegetable flours. Common sources include nut flours and proteins, legume flours and proteins, soy proteins and proteins, oat flours and proteins. In an embodiment, a vegan bakery cream comprises water or aqueous liquid in an amount of about 50% to about 75%, or 65% to about 75% or about 70% to about 75%. In any embodiment a vegan bakery cream further comprises a vegetable protein, a vegetable oil or fat, or a mixture of protein, fat, and oil, in an amount of about 1% to about 10% or about 3% to about 7% (weight % of the bakery cream)

Bakery creams described in this specification are obtained by mixing a set of dry ingredients (for example flavorings, sucrose, powdered milk and a starch component) with water or other aqueous liquid to obtain a homogenous mixture. Bakery creams will develop the desired firmness without need to cook the mixture. In an aspect the technology disclosed in this specification is a powdered mix that can be used to form a bakery cream when mixed with water or other aqueous liquid. In any embodiment described in this specification, a bakery cream powdered mix comprises a starch component wherein the starch component comprises (i) from about 50% to about 75% of a cold water swellable thermally inhibited waxy starch (weight % of the starch component) and (ii) from about 25% to about 50% of a cold water swellable thermally inhibited non-waxy starch (weight % of the starch component) and wherein the bakery cream does not comprise both chemically modified starch and an alginate and optionally does not comprise a gelling salt. In any embodiment described in this specification a bakery cream powder mix comprises a starch component in an amount from 30 to about 50%, or from about 30% to about 40%, or from about 30% to about 35%. In other embodiments a bakery cream powder mix comprises a starch component in an amount from about 40% to about 50% or from about 40% to about 45% by weight of the powdered mix. Any embodiment of a bakery mix comprises dry ingredients in powdered milk in an amount from about 10% to about 20% by weight of the mixture, or from about 15% to about 20%.

Any embodiment of a bakery cream powder mix, as described in this specification, forms a bakery cream having good firmness with addition of a liquid like water. In any embodiment described in this specification, a bakery cream made from a bakery cream powder mix as described in this specification (having from about 65% to about 75%, or from about 70% to about 75% added water by weight of the bakery cream) has a firmness of about at least about 150g or about 150 g to about 225g or about 150 g and about 200 g or from about 150 g to about 190 g within one hour of mixing. In any embodiment described in this specification, a bakery cream made from a bakery cream powder mix as described in this specification (having from about 65% to about 75% or about 70% to about 70% added water by weight of the baker cream) has a firmness development speed of greater than about 65% or greater than about 70% or from about 70% to about 80%. In any embodiment described in this specification, a bakery cream made from a bakery cream powder mix as described in this specification (having from about 65% to about75% or about 70% to about 75% added water by weight of the bakery cream) has a firmness of at least about 150 g, or about 150 g and about 225 g at least 24 hours after mixing and storage at refrigerated temperature (4∘ C) or from about 150 g to about 200 g or from about 150 g to about 190 g. In any embodiment described in this specification, a bakery cream that can be made from a bakery cream powder mix as described in this specification using from about 65% to about 750% or about 70% to about 75% added water by weight of the bakery cream that can be frozen, such bakery cream, when thawed to a temperature of 4∘ C has a firmness of at least about 150 g, or about 150 g and about 225 g or from about 150 g to about 200 g or from about 150 g to about 190 g.

A useful for test for determine the freeze/thaw stability of the bakery creams made from a bakery cream powdered mix is as follows: (1) mix bakery cream powder mix with enough water to make a bakery cream (from about 65% to 75% or about 70% to about 75% water by weight of the bakery cream); (2) allow the bakery cream to rest at room temperature for 1 hour. (3) Store part of the bakery cream at refrigerated temperature of about 4∘C for 24 hours and store part of the bakery cream frozen by flash freezing at about -35∘ C and storing at about -18∘ C for two weeks. (4) Measure the firmness of refrigerated bakery cream at 4∘ C and measure the firmness of the frozen bakery cream after thawing, where the frozen bakery cream is thawed by allowing to sit at 4∘ C for 24 hours. In embodiments described in this specification a thawed bakery cream, made from a bakery cream powdered mix has freeze/thaw stability equal to the percent change in firmness from the never froze to the frozen bakery creams, in any embodiment such percent change being no more than about 35% higher than the refrigerated bakery cream, or no more than about 10% higher, or no more than about 5% higher.

The bakery creams described in this specification are for use in food compositions commonly bakery composition. Any bakery cream may be used with any common food composition. Food compositions described in this specification comprise the bakery cream and a second edible ingredient. Commonly, bakery creams are fillings or toppings for baked goods such as doughnuts, cakes, pastries, breads, muffins, pies, and others. These baked goods are made using common formulas and ingredients.

In another illustrative not claimed aspect, the technology described in this specification is directed to a co-processed starch product. Co-processed starch products consist of a mixture of starches that are processed together, at least in part, to obtain a functionalized product. In any embodiment a co-processed starch product comprises: (a) from about 50% to about 75% of a cold water swellable thermally inhibited waxy starch (weight % of the starch product) and (b) from about 25% to about 50% of a cold water swellable thermally inhibited non-waxy starch (weight % of the starch product). A co-processed starch product described in this specification, although consisting of starch, may comprises starch other than a cold water swellable thermally inhibited waxy starch and cold water swellable thermally inhibited non-waxy starch.

An illustrative co-processed starch product consists (a) from about 50% to about 75% of a cold water swellable thermally inhibited waxy starch (weight % of the starch product) and (b) from about 25% to about 50% of a cold water swellable thermally inhibited non-waxy starch (weight % of the starch product).

An illustrative co-processed starch product comprises a waxy starch in an amount of about 60% to about 70% (weight % of the starch product), and the non-waxy starch is in an amount of about 30% to about 40% (weight % of the starch product). In a co-processed starch product described in this specification, the waxy starch is selected from the group consisting of waxy corn starch, waxy potato starch and waxy tapioca starch. A co-processed starch described in this specification, the non-waxy starch is selected from the group consisting of corn starch, potato starch and tapioca starch.

Co-processed products are mixtures of starches that are functionalized together, at least in part. For example the mixture of starches may be thermally inhibited at the same time in a single reactor. As another example the mixture of starches may be made cold water swellable at the same time using the same reactor. In at least one embodiment a co-processed starch product is made in a process comprising mixing a thermally inhibited waxy starch and thermally inhibited non-waxy starch and gelatinizing the mixture. In any embodiment described in this specification, the co-processed starch product is made by drum drying a mixture of thermally inhibited waxy and non-waxy starch. In any embodiment the co-processed product is made by spray cooking a mixture of thermally inhibited waxy and non-waxy starch.

A co-processed starch product as described in this specification can be used in a bakery cream described in this specification.

The term "starch" as used in this specification refers to food grade starch as that term is commonly understood in the art. Without intending to limit the definition, starch is one or more of the glucose polymers amylose and amylopectin. Starch is obtained from plant organs, for example seeds, grains or tubers, which comprise other components than starch, like protein and fiber. Food grade starches are substantially pure starch, having had components like protein and fiber removed. Food grade starches are greater than about 99% starch (wt.%).

The term "waxy starch" is used in this specification as is common in the art. Without intending to limit the full meaning of the term, waxy starches are obtained from naturally occurring variants of various plants, including tapioca, potato, corn, and rice. Waxy starches consist essentially of amylopectin and are essentially free of amylose.

The term "inhibited starch" refers to a class of starches that have been modified so that swelling and eventual gelatinization of the inhibited starch in the presence of heat and water is slowed (inhibited). Various processes are known in the art for inhibiting starch. A useful test for comparing the degree of inhibition measures the viscosity changes in dilute starch slurry (e.g. about 5% starch solids (w/w)) as the slurry is heated to about 95∘ C. The test can be run in a tool such as a Brabender micro-visco-amylograph. Native starches slurries subjected to a Brabender test increase in viscosity to a point (a swelling phase) then gelatinize after which, slurry viscosity drops. Slurries of inhibited starch have less viscosity build and have less viscosity breakdown (if any) during the Brabender test compared to slurries of native starch. Slurries having more highly inhibited starch have less viscosity build and less viscosity breakdown, than slurries of less inhibited starch.

The term "thermally inhibited starch" as used in this specification refers to starch that has been heated in a substantially anhydrous state to inhibit the starch, meaning that the starch when measured using Brabender Micro-viscos-amylograph, or similar tool, has a viscosity profile like an inhibited starch. Starches may be thermally inhibited by various processes known in the art. One set of process is disclosed in WO 95/04082, which is incorporated herein by reference in its entirety. Using the processes described in the '082 application thermally inhibited starch can be made to have a desired degree of inhibition.

The term "cold water swellable thermally inhibited starch" as used in this specification refers to thermally inhibited starches that have been pre-cooked before its use in application. This allows the starches to provide viscosity to an aqueous composition (including embodiments of the disclosed bakery creams) without further heating of the starch. Cold water swellable may be abbreviated in the art CWS. Cold water swellable thermally inhibited starches may be made by various methods known in the art. One set of processes is disclosed in US 6,261,376, which incorporated herein by reference in its entirety.

By way of illustration, two useful processes for making cold water swellable starch drum drying processes or spray cooking processes. Spray cooking processes force a starch slurry through a heated atomizing nozzle. Spray cooking can make particles of various size by adjusting the pressure developed to force a starch slurry through the nozzle; larger particles are made at lower pressure. Spray cooking tends to form granule-like starch particles. Drum drying processes apply a starch slurry as thin film to a heated rotating drum. The starch dries on the drum, is scraped off, and then ground to a desired particle size. Drum dried starch tends to be flake-like in appearance.

Provided as individual starches the cold water swellable thermally inhibited waxy starch and cold water swellable thermally inhibited non-waxy starch may be drum dried or spray cooked or a combination thereof. Additionally, as individual starches the cold water swellable thermally inhibited waxy starch and cold water swellable thermally inhibited non-waxy starch may have the same or different particle size.

The term "starch component" as used in this specification refers to a component of a food composition, such as the described bakery creams, having all the starch in the food composition. As will be clear from context and usage, a bakery cream can be a food composition and can be added to another food composition. For example, a bakery cream may be used as a filling in a baked good. In this context, the baked good is a second food composition separate from the bakery cream. In such cases, the bakery cream and the baked good contain separate starch components.

The term "gelling salt" as used in this specification refers to a class of salts useful for helping alginates, or more broadly food compositions, gel in a controlled way. Gelling salts include but are not limited to tetrasodium diphosphate, disodium phosphate, and calcium sulphate.

The term "firmness development speed" as used in this specification refers to a percent increase in the firmness of a bakery cream over time. A test useful for measuring firmness development speed follows. Firmness of a bakery cream is measured freshly after mixing and again after allowed to rest for 1 hour at 20∘ C. Firmness development speed can be calculated using the formula firmness development speed equals, (firmness of fresh bakery cream divided by firmness of bakery cream after resting for 1 hour at 20∘ C) multiplied by 100.

The term "baking spread" as used in this specification refers to the difference in diameter of a disk of bakery cream measured before and after baking. A useful test for measuring bakery spread is as follows. (1) Make disks of bakery cream having 5-centimeters diameter and 3-centimeters height. (2) Bake the disks baked at about 180∘ C for 25 minutes and allow to cool (about 5 minutes). Baking spread can be calculated using the formula baking spread equals, the initial diameter of the disk minus the diameter of the disk following baking and cooling.

The term "freeze/thaw stability" as used in this specification refers to one of the increase in firmness of a thawed bakery cream compared to a never frozen bakery cream or the water expelled from a bakery cream as during or after thawing. A useful test for measuring freeze/thaw stability is as follows. Measure firmness of a bakery cream at refrigerated temperature of about 4∘ C for 24 hours and store part. Measure firmness of the bakery having been flash frozen at about - 35∘ C and storing at about -18∘ C for two weeks thawed at 4∘ C for 24 hours. Freeze/thaw stability can be calculated using the percent change in firmness between the never frozen and thawed bakery creams: freeze/thaw stability equals, (firmness of the never frozen bakery cream divided by firmness of thawed bakery cream) multiplied by 100.

The term "liquid expulsion" (and its grammatical variants) as used in this specification refers to the amount of liquid that is expelled from a frozen bakery cream when it is thawed. Other terms for liquid expulsion are liquid separation and syneresis. Liquid expulsion can be measured using any test know in the art, but a useful test for measuring liquid expulsion is as follows. Bakery creams are placed in plastic cups, flash-frozen at -32° C and then stored at -20° C. Bakery creams are stored frozen for up to 2 weeks and then thawed at refrigerated temperatures (4° C) for 24 hours. Cups (without lids) are weighed and placed upside-down. After 30 minutes the cups are weighed again. Liquid expelled is equal to difference in weight between the initial weight of the bakery cream and the cup and the weight of the bakery cream and the cup after 30 minutes inverted storage.

Use of "about" to modify a number is meant to include the number recited plus or minus 10%. Where legally permissible recitation of a value in a claim means about the value. Use of about in a claim or in the specification is not intended to limit the full scope of covered equivalents.

Recitation of the indefinite article "a" or the definite article "the" is meant to mean one or more unless the context clearly dictates otherwise.

While certain embodiments have been illustrated and described, a person with ordinary skill in the art, after reading the foregoing specification, can effect changes, substitutions of equivalents and other types of alterations to the methods, and of the present technology. Each aspect and embodiment described above can also have included or incorporated therewith such variations or aspects as disclosed regarding any or all the other aspects and embodiments.

The present technology is also not to be limited in terms of the aspects described herein, which are intended as single illustrations of individual aspects of the present technology. Many modifications and variations of this present technology can be made without departing from its spirit and scope, as will be apparent to those skilled in the art. Functionally equivalent methods within the scope of the present technology, in addition to those enumerated herein, will be apparent to those skilled in the art from the foregoing descriptions. Such modifications and variations are intended to fall within the scope of the appended claims. It is to be understood that this present technology is not limited to methods, conjugates, reagents, compounds, compositions, labeled compounds or biological systems, which can, of course, vary. All methods described herein can be performed in any suitable order unless otherwise indicated herein or otherwise clearly contradicted by context. It is also to be understood that the terminology used herein is for the purpose of describing aspects only and is not intended to be limiting. Thus, it is intended that the specification be considered as exemplary only with the breadth, scope and spirit of the present technology indicated only by the appended claims, definitions therein and any equivalents thereof. No language in the specification should be construed as indicating any non-claimed element as essential.

The embodiments illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the claimed technology. Additionally, the phrase "consisting essentially of" will be understood to include those elements specifically recited and those additional elements that do not materially affect the basic and novel characteristics of the claimed technology. The phrase "consisting of" excludes any element not specified.

In addition, where features or aspects of the disclosure are described in terms of Markush groups, those skilled in the art will recognize that the disclosure is also thereby described in terms of any individual member or subgroup of members of the Markush group. Each of the narrower species and subgeneric groupings falling within the generic disclosure also form part of the technology. This includes the generic description of the technology with a proviso or negative limitation removing any subject matter from the genus, regardless of whether the excised material is specifically recited herein.

As will be understood by one skilled in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like, include the number recited and refer to ranges which can be subsequently broken down into subranges as discussed above. Finally, as will be understood by one skilled in the art, a range includes each individual member, and each separate value is incorporated into the specification as if it were individually recited herein.

The technology described in this specification can be further understood with reference to the following non-limiting illustrative aspects. The invention is defined by the appended claims.
1. A bakery cream comprising: a starch component wherein the starch component comprises (i) from about 50% to about 75% of a cold water swellable thermally inhibited waxy starch (weight % of the starch component) and (ii) from about 25% to about 50% of a cold water swellable thermally inhibited non-waxy starch (weight % of the starch component) and wherein the bakery cream does not comprise both of a chemically modified starch and an alginate and optionally does not comprise a gelling salt.
2. The bakery cream of aspect 1 wherein the starch component consists of (i) from about 50% to about 75% of a cold water swellable thermally inhibited waxy starch (weight % of the starch component) and (ii) from about 25% to about 50% of a cold water swellable thermally inhibited non-waxy starch (weight % of the starch component).
3. The bakery cream of aspect 1 or 2 wherein the waxy starch is an amount of about 60% to about 70% (by weight of the starch component), and the non-waxy starch is in an amount of about 30% to about 40% (by weight of the starch component).
4. The bakery cream of any one of aspects 1 to 3 wherein the waxy starch is selected from the group consisting of waxy corn starch, waxy potato starch and waxy tapioca starch.
5. The bakery cream of any one of aspects 1 to 4 wherein the non-waxy starch is selected from the group consisting of corn starch, potato starch and tapioca starch.
6. The bakery cream of any one of aspects 1 to 5 having a firmness of at least about 150 g or about 150 g and about 225 g or from about 150 g to about 200 g or from about 150 g to about 190 g at 20° C.
7. The bakery cream of any one of aspects 1 to 6 wherein the bakery cream is a frozen bakery cream and the bakery cream has a firmness at 4° C when thawed at least about 150 g or of about 150 g and about 225 g or from about 150 g to about 200 g or from about 150 g to about 190 g.
8. The bakery cream of any one of aspects 1 to 7 wherein the starch component is in an amount of 5% to about 20% (weight % of the bakery cream), or in an amount selected from the group consisting of (i) about 5% to about 15% or about 8% to about 12% and (ii) about 12% to about 16%.
9. The bakery cream of any one of aspects 1 to 8 further comprising: water in an amount from about 50% to about 75% or 65% to about 75% or about 70% to about 75% (weight % of the bakery cream); and powdered milk in an amount from about 1% to about 10% or about 3% to about 7% (weight % of the bakery cream).
10. The bakery cream of any one of aspects 1 to 9 being a non-dairy bakery cream.
11. The bakery cream of any one of aspects 1 to 10 further comprising: water in an amount from about 50% to about 75% or about 65% to about 75% or about 70% to about 75% (weight % of the bakery cream); and one or more of a vegetable protein, a vegetable fat or a vegetable oil in an amount from about 1% to about 10% or about 3% to about 7% (weight % of the bakery cream).
12. The bakery cream of any one of aspects 1 to 11 further wherein the bakery cream has a baking spread of less than 2 cm, or less than 1 cm.
13. The bakery cream of any one of aspects 1 to 12 wherein a thawed bakery cream, made from has a percent change in firmness compared to a refrigerated, but never frozen sample of the bakery cream of no more than about 35% higher than the refrigerated bakery cream, or no more than about 10% higher, or no more than about 5% higher.
14. The bakery cream of any one of aspects 1 to 13 wherein the bakery cream comprises water or aqueous liquid in amount of from about 65% to about 75% or about 70% to about 75% and has liquid expulsion when thawed after freezing of less than about 1.5 g or less than about 1.0 g or less than about 0.8 g.
15. A bakery cream powder mix suitable to form a bakery cream with water or other aqueous liquid comprising: a starch component wherein the starch component comprises (i) from about 50% to about 75% of a cold water swellable thermally inhibited waxy starch (weight % of the starch component) and (ii) from about 25% to about 50% of a cold water swellable thermally inhibited non-waxy starch (weight % of the starch component) and wherein the bakery cream does not comprise both a chemically modified starch and an alginate and optionally does not comprise a gelling salt.
16. The bakery cream powder mix of aspect 15 wherein the starch component consists of (i) from about 50% to about 75% of a cold water swellable thermally inhibited waxy starch (weight % of the starch component) and (ii) from about 25% to about 50% of a cold water swellable thermally inhibited non-waxy starch (weight % of the starch component).
17. The bakery cream of aspect 15 or 16 wherein the waxy starch is an amount of about 60% to about 70% (weight % of the starch component), and the non-waxy starch is in an amount of about 30% to about 40% (weight % of the starch component).
18. The bakery cream powder mix of any one of aspects 15 to 17 wherein the waxy starch is selected from the group consisting of waxy corn starch, waxy potato starch and waxy tapioca starch.
19. The bakery cream powder mix of any one of aspects 15 to 18 wherein the non-waxy starch is selected from the group consisting of corn starch, potato starch and tapioca starch.
20. The bakery cream powder mix of any one of aspects 15 to 19 wherein the starch component in an amount from about 30% to about 50% by weight of the powdered mix or in an amount selected from the group consisting of: about 30% to about 40% or about 30% to about 35%; and about 40% to about 50% or from about 40% to about 45%.
21. The bakery cream powder mix of any one of aspects 15 to 20 further comprising a powdered milk in an amount from about 10% to about 20% by weight of the mixture, or from about 15% to about 20%.
22. The bakery cream powder mix of any one of aspects 15 to 21 being a non-dairy bakery cream powder mix.
23. The bakery cream powder mix of aspects 15 to 22 further comprising a one or more of a vegetable protein, vegetable oil, or vegetable fat in an amount from about 10% to about 20% by weight of the mixture, or from about 15% to about 20%.
24. The bakery cream powder mix of any one of aspects 15 to 23 capable of forming bakery cream having a firmness within one hour of mixing with from about 65% to about 75% or about 70% to about 75% water (by weight of the bakery cream) of at least about 150 g, or about 150 g and about 225 g or from about 150 g to about 200 g or from about 150 g to about 190 g at 20° C.
25. The bakery cream powder mix of any one of aspects 15 to 24 capable of forming a baker cream when mixed with from about 65% to about 75%, or about 70% to about 75% water (by weight of the bakery cream) having a firmness development speed of greater than about 65% or greater than about 70% or from about 70% to about 80%.
26. The bakery cream powder mix of any one of aspects 15 to 25 capable of forming a bakery cream when mixed with from about 65% to about 75%, or about 70% to about 75% water (by weight of the bakery cream) having a firmness of at least about 150 g, or from about 150 g and about 225 g or from about 150 g to about 200 g or from about 150 g to about 190 g after 24 hours storage at 20° C or at 4° C.
27. The bakery cream powder mix of any one of aspects 15 to 26 capable of forming a bakery cream when mixed with from about 65% to about 75 or about 70% to about 75% water (by weight of the bakery cream) that can be frozen and when thawed to a temperature of 4° C has a firmness of at least about 150 g about 150 g and about 225 g or from about 150 g to about 200 g or from about 150 g to about 190 g.
28. The bakery cream powder mix of any one of aspects 15 to 27 capable of forming a bakery cream that, when mixed with about 65% to about 75% water or about 70% to about 75% (by weight of the bakery cream) and when frozen and thawed expels water in an amount less than 1.5 g or less than 1.0 g, or less than about 0.8 g, or in an amount between about 0.5 g and about 1.5 g, or 0.5 and 1.0 g, or about 0.5 and 0.8 g.
29. A bakery cream powder mix of any one of aspects 15 to 29 capable of forming a bakery cream, when mixed with from about 65% to about 75% or about 70% to about 75% water (by weight of the bakery cream) and when frozen, has a freeze/thaw stability as represented by the percent change in the firmness of the a never frozen bakery cream and a thawed bakery cream of no more than about 35% higher than the refrigerated bakery cream, or no more than about 10% higher, or no more than about 5% higher.
30. Use of a mixture of from about 50% to about 75% of a cold water swellable thermally inhibited waxy starch (weight % of the starch component) and (ii) from about 25% to about 50% of a cold water swellable thermally inhibited non-waxy starch (weight % of the starch component) to make a bakery cream or bakery cream powder mix as described in any foregoing claim.
31. The use as described in aspect 31 wherein the waxy starch is an amount of about 60% to about 70% (weight % of the starch component), and the non-waxy starch is in an amount of about 30% to about 40% (weight % of the starch component).
32. A food product comprising the bakery cream of any foregoing aspect and a second edible ingredient.
33. A co-processed starch product comprising (a) from about 50% to about 75% of a cold water swellable thermally inhibited waxy starch (weight % of the product) and (b) from about 25% to about 50% of a cold water swellable thermally inhibited non-waxy starch (weight % of the product).
34. The co-processed starch product of aspect 33 wherein the starch component consists of: (a) from about 50% to about 75% of a cold water swellable thermally inhibited waxy starch (weight % of the product) and (b) from about 25% to about 50% of a cold water swellable thermally inhibited non-waxy starch (weight % of the product).
35. The co-processed starch product of aspect 33 or 34 wherein the waxy starch is an amount of about 60% to about 70% (weight % of the product), and the non-waxy starch is in an amount of about 30% to about 40% (weight % of the product).
36. The co-processed starch product of any one of aspects 33 to 35 wherein the waxy starch is selected from the group consisting of waxy corn starch, waxy potato starch and waxy tapioca starch.
37. The co-processed starch product of any one of aspects 33 to 36 wherein the non-waxy starch is selected from the group consisting of corn starch, potato starch and tapioca starch.
38. The co-processed starch product of any one of aspects 33 to 37 made by a process comprising mixing a thermally inhibited waxy starch and thermally inhibited non-waxy starch and gelatinizing the mixture.
39. The co-processed starch product of any one of aspects 33 to 38 wherein the mixture is gelatinized using drum drying.
40. The co-processed starch product of any one of aspects 33 to 39 wherein the mixture is gelatinized using spray cooking.
41. Use of the co-processed starch product of aspects 33 to 40 to make a bakery cream powder mix or bakery cream as described in any foregoing claim.
42. A starch mixture consisting of (a) from about 50% to about 75% of a cold water swellable thermally inhibited waxy starch (weight % of the product) and (b) from about 25% to about 50% of a cold water swellable thermally inhibited non-waxy starch (weight % of the product).
43. The starch mixture of aspect 42 wherein the waxy starch is an amount of about 60% to about 70% (weight % of the product), and the non-waxy starch is in an amount of about 30% to about 40% (weight % of the product).
44. The starch mixture of aspect 42 or 43 wherein the waxy starch is selected from the group consisting of waxy corn starch, waxy potato starch and waxy tapioca starch.
45. The starch mixture of any one of aspect 42 or 44 wherein the non-waxy starch is selected from the group consisting of corn starch, potato starch and tapioca starch.
46. Use of the co-processed starch product of aspects 42 or 45 to make a bakery cream powder mix or bakery cream as described in any foregoing aspect.
47. The starch mixture or bakery cream powder mix as described in any foregoing aspect wherein the cold water swellable thermally inhibited waxy starch and cold water swellable thermally inhibited non-waxy starch are rendered cold water swellable in drum drying process or a spray cooking process wherein, optionally, one of the cold water swellable thermally inhibited waxy starch and cold water swellable thermally inhibited non-waxy starch is rendered cold water swellable in a drum drying process, and the other of the cold water swellable thermally inhibited waxy starch and cold water swellable thermally inhibited non-waxy starch is rendered cold water swellable in a spray cooking process.

The technology described in this specification can be further understood with reference to the following non-limiting examples.

### EXAMPLE 1 - MODEL OF BAKERY CREAM

Bakery creams were made using the model system described in Table 1.

**Table 1**

| Model System of Bakery Cream | | |
|---|---|---|
| Ingredient | Wt.% of Bakery Cream | Wt.% of powdered mixture |
| Crystal Sugar | 11.6 | 36.2 |
| Vanilla Sugar | 0.9 | 2.8 |
| Whole Milk Powder | 2.8 | 8.8 |
| Skimmed Milk Powder | 2.8 | 8.8 |
| Starch | 13.9 | 43.4 |
| | | 100% |
| Water | 68.0 | N/A |
| | 100% | |

Bakery creams were made using the formula of Table 1 as follows. All ingredients except water were mixed until homogenous to form a powdered mixture. Water was then added, and the mixture was first hand whisked to incorporate all ingredients and then blended using mixer to form a homogenous bakery cream.

The composition of an alternate model bakery cream is disclosed in Table 2.

**Table 2**

| Alternate Model of Bakery Cream | | |
|---|---|---|
| Ingredient | Wt.% of Bakery Cream | Wt.% of powdered mixture |
| Crystal Sugar | 12.0 | 41.4 |
| Vanilla Sugar | 0.9 | 3.1 |
| Whole Milk Powder | 3.0 | 10.3 |
| Skimmed Milk Powder | 3.0 | 10.3 |
| Starch | 10.1 | 34.9 |
| | | |
| Water | 71.0 | N/A |
| | 100% | |

### EXAMPLE 2 - COMPARATIVE RESULTS - BAKERY CREAMS USING ONLY WAXY STARCHES

Bakery creams were made using the formula of Table 1 wherein the starch component was a cold water swellable, thermally inhibited waxy starch. Such bakery cream samples exhibited good textural firmness, but poor functional and organoleptic texture compared to a control bakery cream made using alginates, modified starches and gelling salts. Functional and organoleptic textural properties were measured by six panelists who were regularly trained on assessing and quantifying focused descriptors for instant bakery creams. Each sample was rated individually relative to the control using and responses were input to Compusense Cloud software. Samples were scored on a scale from -5 to 5 compared to the control, with zero being awarded if the exemplary bakery cream was perceived to be the same as the control bakery cream. Positive values indicate a perceived degree of increase of a trait in an exemplary bakery cream compared to the control, and negative values indicated a perceived degree of decrease of trait in an exemplary bakery cream compared to the control. All samples were served at ambient temperature, blinded, and tasted in counterbalanced order across panelists. Panelists cut into bakery cream samples with a spoon. A spoonful of bakery cream was taken into the mouth of a panelist and orally manipulated with the tongue for about 10 seconds and then swallowed. During this procedure, the bakery cream samples were evaluated by the panelist.

Baking cream samples were evaluated based on six descriptors, which are defined as follows. (1) Tailing: Degree to which the bakery cream product stretches/tails the spoon when the cut sample is transferred to a panelist's mouth. (2) Cohesiveness: The amount of deformation/stringing displayed by the cut bakery cream, rather than shear/cut or rupture. (3) Adhesiveness: The force with which the product sticks to the palate during oral manipulation. (4) Meltaway: The rate at which a sample dissolves or melts in the panelist's mouth. (5) Smoothness: The extent to which a sample has an even and regular consistency during oral manipulation; the lack of orally detectable particulates in the sample. Off-note: For any flavor detected during evaluation, the intensity of any flavor that is unpleasant to the panelist and/or is not a flavor characteristic of the product.

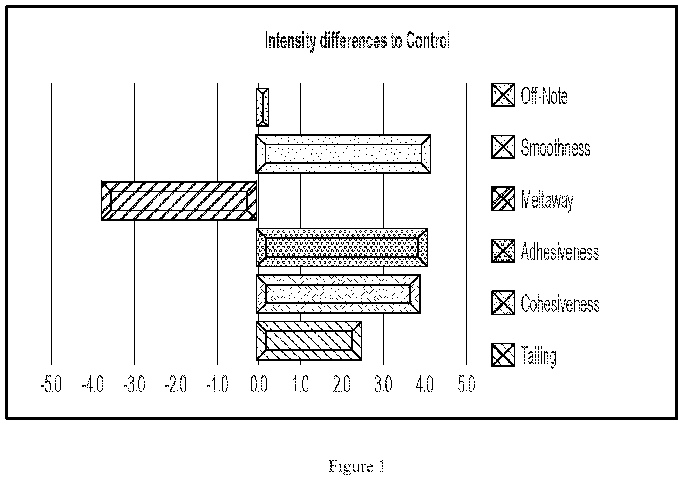

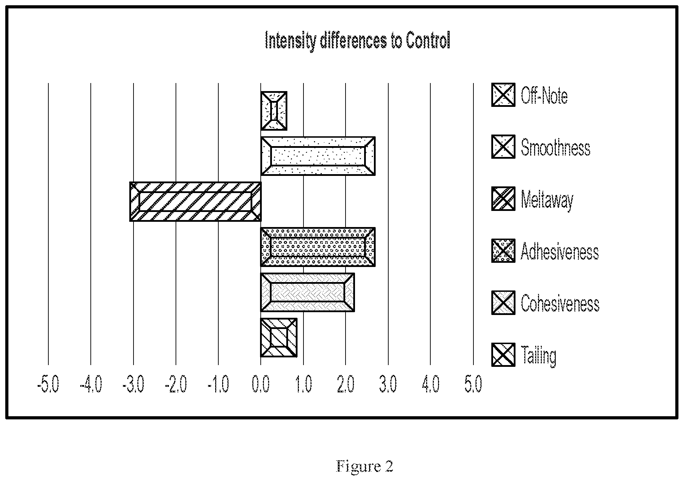

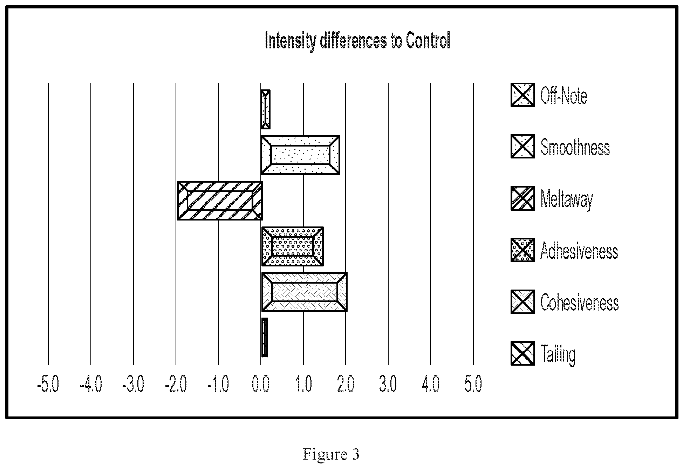

Figure 1 reports results of a bakery cream (Sample 1) having a starch component consisting of a cold water swellable thermally inhibited waxy corn starch compared to control. Figure 2 reports the results of a bakery cream (Sample 2) having a starch component consisting of a cold water swellable thermally inhibited waxy tapioca starch compared to control. Figure 3 reports the results of a bakery cream (Sample 3) having a starch component consisting of a mixture of two-thirds cold water soluble thermally inhibited waxy corn starch and one-third cold water swellable thermally inhibited potato starch. As seen Sample 3 most closely matches the functional and organoleptic texture of the control bakery cream.

### EXAMPLE 3 - COMPARATIVE RESULTS OF BAKERY CREAMS USING MIXES OF WAXY AND NON-WAXY STARCHES

Bakery creams were made using the formula of Table 1 wherein the starch component was a mixture of a cold water swellable, thermally inhibited waxy starch and a cold water swellable, thermally inhibited non-waxy starch. Samples were made with different starch bases to investigate firmness development speed and change of firmness over time and freeze/thaw stability for bakery creams made with different starches. Firmness measurements were made as follows. Firmness and firmness development were measured using TA-XT2 (Texture Analyzer TA.XT2 plus (5 kg load cell, Probe PP/25, probe advanced at 2 mm/sec for 10 mm with a trigger force of 3g). Samples were measured at 20∘ C immediately after mixing (fresh samples), after 1-hour storage and after 24-hours storage.

Firmness development speed was calculated as a percentage using textures measured at 20∘ C using the formula equals (firmness fresh divided by firmness 1h) multiplied 100.

Freeze/thaw stability was measured as follows: Stored part of the bakery cream at refrigerated temperature of about 4∘ C for 24 hours and stored part of the bakery cream frozen by flash freezing at about -35∘ C and stored at about -18∘ C for two weeks. Measured the firmness of refrigerated bakery cream at 4∘ C and measured the firmness of the frozen bakery cream after thawing, where the frozen bakery cream was thawed by allowing to sit at 4∘ C for 24 hours. The freeze/thaw stability equals (refrigerated firmness divided by thawed firmness) multiplied by 100.

Sample 3, made as described above, was measured for firmness. Also measured were Sample 4 and Sample 5. Sample 4 comprised a starch component having two-thirds cold water swellable, thermally inhibited waxy corn starch and one-third cold water swellable non-waxy tapioca starch. Sample 5 comprised a starch component having one-third cold water swellable, thermally inhibited waxy corn starch and two-thirds cold water swellable potato starch. Firmness results are reported in Table 3.

**Table 3**

| Bakery Creams Firmness Measurements | | | | |
|---|---|---|---|---|
| | Firmness fresh (20° C) | Firmness 1 hr. (20° C) | Freeze/thaw stability | Firmness development speed |
| Sample 3 | 118.7 g | 155.1 g | 5% | 76.5% |
| Sample 4 | 133.3 g | 158.8 g | 33% | 84.0% |
| Sample 5 | 175.1 g | 272.4 g | 67% | 64.3% |

### EXAMPLE 4 WATER EXPULSION FROM A BAKERY CREAM ON THAWING

Samples of a bakery cream were made using the formula of Table 2 and a 2:1 (w/w) ratio of thermally inhibited waxy corn starch and thermally inhibited potato starch. The bakery creams were evaluated for water expulsion. The water expulsion test was carried out as follows. Each subsample bakery cream was placed in a plastic cup (enough to fill the cup), was flash-frozen at - 32° C and then stored at -20° C. Portions of each bakery cream were stored frozen for up to 2 weeks and then thawed at refrigerated temperatures (4° C) for 24 hours. Any separated water was removed, and the bakery cream was reweighed. Water expulsion is equal to the difference between the initial and final weights of the bakery cream. Bakery creams made as describe in cups have a weight of about 75g and an average water expulsion of the four samples was about 1.1 g.

## Claims

1. A bakery cream comprising: a starch component
wherein the starch component comprises (i) from about 50% to about 75% of a cold water swellable thermally inhibited waxy starch (weight % of the starch component) or from about 60% to about 70% and (ii) from about 25% to about 50% of a cold water swellable thermally inhibited non-waxy starch (weight % of the starch component) 0r from about 30% to about 40% and
water
wherein the bakery cream does not comprise a both chemically modified starch and an alginate and optionally does not comprise a gelling salt.

2. The bakery cream of claim 1 wherein the waxy starch is selected from the group consisting of waxy corn starch, waxy potato starch and waxy tapioca starch; wherein optionally the waxy starch is a waxy corn starch.

3. The bakery cream of any one of claims 1 to 2 wherein the non-waxy starch is selected from the group consisting of corn starch, potato starch and tapioca starch, wherein, optionally, the non-waxy starch is a potato starch.

4. The bakery cream of any one of claims 1 to 3 wherein the starch component is in an amount of 5% to about 20% (weight % of the bakery cream), or in an amount selected from the group consisting of
a. about 5% to about 15%, or about 8% to about 12% and
b. about 12% to about 16%.

5. The bakery cream of any one of claims 1 to 4 wherein the water in an amount from about 50% to about 75% or about 65% to about 75% or about 70% to about 75% (weight % of the bakery cream); and
further comprising a powdered milk in an amount from about 1% to about 10% or about 3% to about 7% (weight % of the bakery cream).

6. The bakery cream of any one of claims 1 to 5 being a non-dairy bakery cream.

7. The bakery cream of any one of claims 1 to 6 further comprising:
water in an amount from about 50% to about 75% or about 65% to about 75% or about 70% to about 75% (weight % of the bakery cream); and
one or more of a vegetable protein, a vegetable fat or a vegetable oil in an amount from about 1% to about 10%, or about 3% to about 7% (weight % of the bakery cream).

8. A bakery cream powder mix suitable to form a bakery cream with water or other aqueous liquid comprising: a starch component
wherein the starch component comprises (i) from about 50% to about 75% of a cold water swellable thermally inhibited waxy starch (weight % of the starch component) or from about 60% to about 70% and (ii) from about 25% to about 50% of a cold water swellable thermally inhibited non-waxy starch (weight % of the starch component) or from about 30% to about 40% and
wherein the bakery cream does not comprise both a chemically modified starch and an alginate and optionally does not comprise a gelling salt
wherein, optionally, the waxy starch is selected from the group consisting of waxy corn starch, waxy potato starch and waxy tapioca starch, wherein, optionally, thew waxy starch is a waxy corn starch and
wherein, optionally, the non-waxy starch is selected from the group consisting of corn starch, potato starch and tapioca starch, wherein, optionally, the non-waxy starch is a potato starch.

9. The bakery cream powder mix of claim 8 wherein the starch component in an amount from about 30% to about 50% by weight of the powdered mix or in an amount selected from the group consisting of:
a. about 30% to about 40% or about 30% to about 35%; and
b. about 40% to about 50% or from about 40% to about 45%.

10. The bakery cream powder mix of any one of claims 8 to 9 further comprising a powdered milk in an amount from about 10% to about 20% by weight of the mixture, or from about 15% to about 20%.

11. The bakery cream powder mix of any one of claims 8 to 10 being a non-dairy bakery cream powder mix.

12. The bakery cream powder mix of claims 8 to 11 further comprising one or more of a vegetable protein, vegetable oil, or vegetable fat in an amount from about 10% to about 20% by weight of the mixture, or from about 15% to about 20%.

13. A food product comprising the bakery cream of claims 1 to 7 and a second edible ingredient.

14. A starch mixture consisting of
(a) from about 50% to about 75% of a cold water swellable thermally inhibited waxy starch (weight % of the product) or from about 60% to about 70% and
(b) from about 25% to about 50% of a cold water swellable thermally inhibited non-waxy starch (weight % of the product) or from about 30% to about 40%
wherein, optionally, the waxy starch is selected from the group consisting of waxy corn starch, waxy potato starch and waxy tapioca starch, wherein, optionally the waxy starch is a waxy corn starch
wherein, optionally, the non-waxy starch is selected from the group consisting of corn starch, potato starch and tapioca starch, wherein, optionally, the non-waxy starch is a potato starch.

15. The starch mixture or bakery cream powder mix as described in claims 8 to 14
wherein the cold water swellable thermally inhibited waxy starch and cold water swellable thermally inhibited non-waxy starch are rendered cold water swellable in drum drying process or a spray cooking process
wherein, optionally, one of the cold water swellable thermally inhibited waxy starch and cold water swellable thermally inhibited non-waxy starch is rendered cold water swellable in a drum drying process, and the other of the cold water swellable thermally inhibited waxy starch and cold water swellable thermally inhibited non-waxy starch is rendered cold water swellable in a spray cooking process.

## Patentansprüche

1. Backcreme, umfassend: einer Stärkekomponente
wobei die Stärkekomponente (i) von etwa 50 % bis etwa 75 % einer kaltwasserquellbaren, thermisch inhibierten Wachsstärke (Gewichtsprozent der Stärkekomponente) oder von etwa 60 % bis etwa 70 % und (ii) von etwa 25 % bis etwa 50 % einer kaltwasserquellbaren, thermisch inhibierten, nicht wachsartigen Stärke (Gewichtsprozent der Stärkekomponente) oder von etwa 30 % bis etwa 40 % umfasst und
Wasser,
wobei die Backcreme weder eine chemisch modifizierte Stärke noch ein Alginat und optional kein Geliersalz umfasst.

2. Backcreme nach Anspruch 1, wobei die Wachsstärke aus der Gruppe ausgewählt ist, die aus Wachsmaisstärke, Wachskartoffelstärke und Wachstapiokastärke besteht; wobei die Wachsstärke optional eine Wachsmaisstärke ist.

3. Backcreme nach einem der Ansprüche 1 bis 2, wobei die nicht wachsartige Stärke aus der Gruppe ausgewählt ist, die aus Maisstärke, Kartoffelstärke und Tapiokastärke besteht, wobei die nicht wachsartige Stärke optional eine Kartoffelstärke ist.

4. Backcreme nach einem der Ansprüche 1 bis 3, wobei die Stärkekomponente in einer Menge von 5 % bis etwa 20 % (Gewichtsprozent der Backcreme) oder in einer Menge ausgewählt aus der Gruppe bestehend aus
a. etwa 5 % bis etwa 15 % oder etwa 8 % bis etwa 12 % und
b. etwa 12 % bis etwa 16 %.

5. Backcreme nach einem der Ansprüche 1 bis 4, wobei das Wasser in einer Menge von etwa 50 % bis etwa 75 % oder etwa 65 % bis etwa 75 % oder etwa 70 % bis etwa 75 % (Gewichtsprozent der Backcreme) enthalten ist; und
ferner umfassend Milchpulver in einer Menge von etwa 1 % bis etwa 10 % oder etwa 3 % bis etwa 7 % (Gewichtsprozent der Backcreme).

6. Backcreme nach einem der Ansprüche 1 bis 5, die eine milchfreie Backcreme ist.

7. Backcreme nach einem der Ansprüche 1 bis 6, ferner umfassend:
Wasser in einer Menge von etwa 50 % bis etwa 75 % oder etwa 65 % bis etwa 75 % oder etwa 70 % bis etwa 75 % (Gewichtsprozent der Backcreme); und
eines oder mehrere von einem Pflanzenprotein, einem Pflanzenfett oder einem Pflanzenöl in einer Menge von etwa 1 % bis etwa 10 % oder etwa 3 % bis etwa 7 % (Gewichtsprozent der Backcreme).

8. Backcremepulvermischung, die zur Bildung einer Backcreme mit Wasser oder einer anderen wässrigen Flüssigkeit geeignet ist, umfassend: eine Stärkekomponente, wobei die Stärkekomponente (i) von etwa 50 % bis etwa 75 % einer kaltwasserquellbaren, thermisch inhibierten Wachsstärke (Gewichtsprozent der Stärkekomponente) oder von etwa 60 % bis etwa 70 % und (ii) von etwa 25 % bis etwa 50 % einer kaltwasserquellbaren, thermisch inhibierten, nicht wachsartigen Stärke (Gewichtsprozent der Stärkekomponente) oder von etwa 30 % bis etwa 40 %, und
wobei die Backcreme weder eine chemisch modifizierte Stärke noch ein Alginat umfasst und optional kein Geliersalz umfasst,
wobei die Wachsstärke optional aus der Gruppe ausgewählt ist, die aus Wachsmaisstärke, Wachskartoffelstärke und Wachstapiokastärke besteht, wobei die Wachsstärke optional eine Wachsmaisstärke ist und
wobei die nicht wachsartige Stärke optional aus der Gruppe ausgewählt ist, die aus Maisstärke, Kartoffelstärke und Tapiokastärke besteht, wobei optional die nicht wachsartige Stärke eine Kartoffelstärke ist.

9. Backcremepulvermischung nach Anspruch 8, wobei die Stärkekomponente in einer Menge von etwa 30 % bis etwa 50 % des Gewichts der Pulvermischung oder in einer Menge ausgewählt aus der Gruppe bestehend aus:
a. etwa 30 % bis etwa 40 % oder etwa 30 % bis etwa 35 %; und
b. etwa 40 % bis etwa 50 % oder von etwa 40 % bis etwa 45 %.

10. Backcremepulvermischung nach einem der Ansprüche 8 bis 9, ferner umfassend ein Milchpulver in einer Menge von etwa 10 % bis etwa 20 % des Gewichts der Mischung oder von etwa 15 % bis etwa 20 %.

11. Backcremepulvermischung nach einem der Ansprüche 8 bis 10, die eine milchfreie Backcremepulvermischung ist.

12. Backcremepulvermischung nach den Ansprüchen 8 bis 11, ferner umfassend eines oder mehrere von einem Pflanzenprotein, Pflanzenöl oder Pflanzenfett in einer Menge von etwa 10 % bis etwa 20 % des Gewichts der Mischung oder von etwa 15 % bis etwa 20 %.

13. Lebensmittelprodukt, das die Backcreme nach den Ansprüchen 1 bis 7 und eine zweite essbare Zutat umfasst.

14. Stärkemischung, bestehend aus
(a) von etwa 50 % bis etwa 75 % einer kaltwasserquellbaren, thermisch inhibierten Wachsstärke (Gewichtsprozent des Produkts) oder von etwa 60 % bis etwa 70 % und
(b) von etwa 25 % bis etwa 50 % einer kaltwasserquellbaren, thermisch inhibierten, nicht wachsartigen Stärke (Gewichtsprozent des Produkts) oder von etwa 30 % bis etwa 40 %,
wobei die Wachsstärke optional aus der Gruppe ausgewählt ist, die aus Wachsmaisstärke, Wachskartoffelstärke und Wachstapiokastärke besteht, wobei die Wachsstärke optional eine Wachsmaisstärke ist,
wobei die nicht wachsartige Stärke optional aus der Gruppe ausgewählt ist, die aus Maisstärke, Kartoffelstärke und Tapiokastärke besteht, wobei optional die nicht wachsartige Stärke eine Kartoffelstärke ist.

15. Stärkemischung oder Backcremepulvermischung wie in den Ansprüchen 8 bis 14 beschrieben, wobei die kaltwasserquellbare, thermisch inhibierte Wachsstärke und die kaltwasserquellbare, thermisch inhibierte, nicht wachsartige Stärke in einem Trommeltrocknungsverfahren oder einem Sprühkochverfahren kaltwasserquellbar gemacht werden,
wobei wahlweise eine der kaltwasserquellbaren, thermisch inhibierten Wachsstärke und der kaltwasserquellbaren, thermisch inhibierten, nicht wachsartigen Stärke in einem Trommeltrocknungsverfahren kaltwasserquellbar gemacht wird und die andere der kaltwasserquellbaren, thermisch inhibierten Wachsstärke und der kaltwasserquellbaren, thermisch inhibierten, nicht wachsartigen Stärke in einem Sprühkochprozess kaltwasserquellbar gemacht wird.

## Revendications

1. Crème pour pâtisserie comprenant : un composant d'amidon
dans laquelle le composant d'amidon comprend (i) d'environ 50 % à environ 75 % d'un amidon cireux thermiquement inhibé et gonflable à l'eau froide (% en poids du composant d'amidon) ou d'environ 60 % à environ 70 % et (ii) d'environ 25 % à environ 50 % d'un amidon non cireux thermiquement inhibé et gonflable à l'eau froide (% en poids du composant d'amidon) ou d'environ 30 % à environ 40 % et
de l'eau
dans laquelle la crème pour pâtisserie ne comprend pas à la fois un amidon chimiquement modifié et un alginate et, facultativement, ne comprend pas de sel gélifiant.

2. Crème de boulangerie selon la revendication 1, dans laquelle l'amidon cireux est choisi dans le groupe constitué d'amidon de maïs cireux, amidon de pomme de terre cireux et amidon de tapioca cireux ; dans laquelle, facultativement, l'amidon cireux est un amidon de maïs cireux.

3. Crème de boulangerie selon l'une quelconque des revendications 1 à 2, dans laquelle l'amidon non cireux est choisi dans le groupe constitué d'amidon de maïs, amidon de pomme de terre et amidon de tapioca, dans laquelle, facultativement, l'amidon non cireux est un amidon de pomme de terre.

4. Crème pour pâtisserie selon l'une quelconque des revendications 1 à 3, dans laquelle le composant d'amidon est présent en une quantité de 5 % à environ 20 % (% en poids de la crème pour pâtisserie), ou en une quantité choisie dans le groupe constitué de
a. environ 5 % à environ 15 %, ou environ 8 % à environ 12 % et
b. environ 12 % à environ 16 %.

5. Crème pour pâtisserie selon l'une quelconque des revendications 1 à 4, dans laquelle l'eau est présente en une quantité allant d'environ 50 % à environ 75 % ou d'environ 65 % à environ 75 % ou d'environ 70 % à environ 75 % (% en poids de la crème pour pâtisserie) ; et
comprenant en outre un lait en poudre en une quantité allant d'environ 1 % à environ 10 % ou d'environ 3 % à environ 7 % (% en poids de la crème pour pâtisserie).

6. Crème pour pâtisserie selon l'une quelconque des revendications 1 à 5, qui est une crème pour pâtisserie non laitière.

7. Crème pour pâtisserie selon l'une quelconque des revendications 1 à 6, comprenant en outre :
de l'eau en une quantité allant d'environ 50 % à environ 75 % ou d'environ 65 % à environ 75 % ou d'environ 70 % à environ 75 % (% en poids de la crème pour pâtisserie) ; et
une ou plusieurs parmi une protéine végétale, une graisse végétale ou une huile végétale en une quantité allant d'environ 1 % à environ 10 %, ou d'environ 3 % à environ 7 % (% en poids de la crème pour pâtisserie).

8. Mélange de poudre de crème pour pâtisserie apte à former une crème pour pâtisserie avec de l'eau ou un autre liquide aqueux comprenant : un composant d'amidon dans lequel le composant d'amidon comprend (i) d'environ 50 % à environ 75 % d'un amidon cireux thermiquement inhibé et gonflable à l'eau froide (% en poids du composant d'amidon) ou d'environ 60 % à environ 70 % et (ii) d'environ 25 % à environ 50 % d'un amidon non cireux thermiquement inhibé et gonflable à l'eau froide (% en poids du composant d'amidon) ou d'environ 30 % à environ 40 % et
dans lequel la crème pour pâtisserie ne comprend pas à la fois un amidon chimiquement modifié et un alginate et, facultativement, ne comprend pas de sel gélifiant
dans lequel, facultativement, l'amidon cireux est choisi dans le groupe constitué d'amidon de maïs cireux, amidon de pomme de terre cireux et amidon de tapioca cireux, dans lequel, facultativement, l'amidon cireux est un amidon de maïs cireux et
dans lequel, facultativement, l'amidon non cireux est choisi dans le groupe constitué d'amidon de maïs, amidon de pomme de terre et amidon de tapioca, dans lequel, facultativement, l'amidon non cireux est un amidon de pomme de terre.

9. Mélange en poudre de crème pour pâtisserie selon la revendication 8, dans lequel le composant d'amidon est présent en une quantité allant d'environ 30 % à environ 50 % en poids du mélange en poudre ou en une quantité choisie dans le groupe constitué de :
a. environ 30 % à environ 40 % ou environ 30 % à environ 35 % ; et
b. environ 40 % à environ 50 % ou environ 40 % à environ 45 %.

10. Mélange en poudre de crème pour pâtisserie selon l'une quelconque des revendications 8 à 9, comprenant en outre un lait en poudre en une quantité allant d'environ 10 % à environ 20 % en poids du mélange, ou d'environ 15 % à environ 20 %.

11. Mélange en poudre de crème pour pâtisserie selon l'une quelconque des revendications 8 à 10, qui est un mélange en poudre de crème pour pâtisserie non laitier.

12. Mélange en poudre de crème pour pâtisserie selon les revendications 8 à 11, comprenant en outre une ou plusieurs parmi une protéine végétale, une huile végétale, ou une graisse végétale en une quantité allant d'environ 10 % à environ 20 % en poids du mélange, ou d'environ 15 % à environ 20 %.

13. Produit alimentaire comprenant la crème pour pâtisserie selon les revendications 1 à 7 et un second ingrédient comestible.

14. Mélange d'amidon constitué de
(a) environ 50 % à environ 75 % d'un amidon cireux thermiquement inhibé et gonflable à l'eau froide (% en poids du produit) ou d'environ 60 % à environ 70 % et
(b) environ 25 % à environ 50 % d'un amidon non cireux thermiquement inhibé et gonflable à l'eau froide (% en poids du produit) ou d'environ 30 % à environ 40 %
dans lequel, facultativement, l'amidon cireux est choisi dans le groupe constitué d'amidon de maïs cireux, amidon de pomme de terre cireux et amidon de tapioca cireux, dans lequel, facultativement, l'amidon cireux est un amidon de maïs cireux
dans lequel, facultativement, l'amidon non cireux est choisi dans le groupe constitué d'amidon de maïs, amidon de pomme de terre et amidon de tapioca, dans lequel, facultativement, l'amidon non cireux est un amidon de pomme de terre.

15. Mélange d'amidon ou mélange en poudre de crème pour pâtisserie selon les revendications 8 à 14, dans lequel l'amidon cireux inhibé thermiquement et gonflable à l'eau froide et l'amidon non cireux inhibé thermiquement et gonflable à l'eau froide sont rendus gonflables à l'eau froide dans un processus de séchage sur cylindres ou dans un processus de cuisson par pulvérisation
dans lequel, facultativement, l'un de l'amidon cireux thermiquement inhibé et gonflable à l'eau froide et de l'amidon non cireux thermiquement inhibé et gonflable à l'eau froide est rendu gonflable à l'eau froide dans un processus de séchage sur cylindres, et l'autre de l'amidon cireux thermiquement inhibé et gonflable à l'eau froide et de l'amidon non cireux thermiquement inhibé et gonflable à l'eau froide est rendu gonflable à l'eau froide dans un processus de cuisson par pulvérisation.
